Europäisches Patentamt

European Patent Office

Office européen des brevets

(19)

(11) **EP 1 360 688 B1**

(12) **FASCICULE DE BREVET EUROPEEN**

(45) Date de publication et mention
de la délivrance du brevet:
**01.06.2005 Bulletin 2005/22**

(21) Numéro de dépôt: **01980599.3**

(22) Date de dépôt: **17.10.2001**

(51) Int Cl.⁷: **G11B 7/24**, G11B 7/26,
G11B 7/00, G11B 7/135

(86) Numéro de dépôt international:
**PCT/FR2001/003215**

(87) Numéro de publication internationale:
**WO 2002/033701 (25.04.2002 Gazette 2002/17)**

(54) **SUPPORT D'ENREGISTREMENT D'INFORMATIONS LISIBLES OPTIQUEMENT, PROCEDE POUR SA REALISATION ET SYSTEME OPTIQUE DE REPRODUCTION DESDITES INFORMATIONS**

OPTISCH LESEBARES INFORMATIONSAUFZEICHNUNGSMEDIUM, DESSEN HERSTELLUNGSVERFAHREN, UND OPTISCHES SYSTEM ZUR WIEDERGABE DIESER INFORMATIONEN

MEDIUM FOR RECORDING OPTICALLY READABLE DATA, METHOD FOR MAKING SAME AND OPTICAL SYSTEM REPRODUCING SAID DATA

(84) Etats contractants désignés:
**AT BE CH CY DE DK ES FI FR GB GR IE IT LI LU MC NL PT SE TR**

(30) Priorité: **17.10.2000 US 13288**

(43) Date de publication de la demande:
**12.11.2003 Bulletin 2003/46**

(73) Titulaire: **Thales**
**75008 Paris (FR)**

(72) Inventeur: **LEHUREAU, Jean-Claude**
**Thales Intellectual Property**
**F-94117 Arcueil Cedex (FR)**

(74) Mandataire: **Esselin, Sophie**
**Thales Intellectual Property,**
**31-33, avenue Aristide Briand**
**94117 Arcueil Cedex (FR)**

(56) Documents cités:
**EP-A- 0 440 214**      **EP-A- 0 729 142**
**WO-A-00/17867**      **FR-A- 2 271 617**

## Description

La présente invention se rapporte à un support d'enregistrement d'informations lisibles optiquement du type multicouches, à un procédé pour sa réalisation et à un système optique de reproduction desdites informations pour la lecture d'un tel support.

L'enregistrement de données a subi une évolution rapide depuis les premières années de l'informatique et des calculateurs. La technologie qui s'est imposée jusqu'à maintenant est l'enregistrement magnétique, incluant les lecteurs-enregistreurs (drives) disques durs et les disques souples (« floppy discs »). Une première limitation importante est apparue lorsque les applications ont commencé à demander des volumes de données incompatibles avec les possibilités des disques souples (plusieurs dizaines de disques de 1,4 MB par exemple pour une application). Entre temps, avait été développée une nouvelle voie, l'enregistrement optique, qui trouva d'abord des applications dans l'enregistrement audio (compact disque CD) puis vint résoudre le problème des disques souples magnétiques (CD-ROM) grâce à une capacité de stockage très largement supérieure qui s'est encore améliorée avec l'apparition des disques DVD.

Pour les disques durs, l'enregistrement magnétique a encore des possibilités de croissance importantes mais il devrait atteindre des limites physiques dans une quinzaine d'années. Les prévisions sur les densités d'enregistrement souhaitables mais que l'enregistrement magnétique ne pourrait probablement pas satisfaire suffisamment tôt montrent que, dans moins d'une dizaine d'années, il existera un besoin pour des supports mémoire de 100 gigaoctets ou plus.

L'enregistrement optique tel qu'il existe actuellement utilise des disques porteurs d'informations lisibles optiquement obtenus en gravant des éléments diffractants (cas du CD) au niveau d'une couche réflectrice. On choisit pour ces éléments diffractants une épaisseur voisine de $\lambda/6$ ($\lambda$ longueur d'onde de la source laser utilisée) de manière que le contraste de ces éléments soit maximum (différence de chemin optique $2ne = \frac{\lambda}{2}$). Les progrès que l'on peut envisager quant à la densité d'informations enregistrées passent par l'utilisation de longueurs d'onde plus courtes (sources laser bleues mais on ne peut guère aller vers l'ultraviolet du fait d'inconvénients liés aux matériaux généralement polymères utilisés pour les disques), d'ouverture numérique plus élevée ou de traitement du signal amélioré. Mais les perspectives restent limitées. On sait par ailleurs que l'on peut lire quelques couches superposées en ne revêtant chaque plan porteur de reliefs diffractants que d'une couche faiblement réflectrice. Cependant, pour des raisons énergétiques, il n'est possible de superposer qu'un faible nombre de couches. En effet, si l'on suppose par exemple que la première couche a une réflectivité de 3 %, la seconde devra avoir une réflectivité augmentée de 6 %, la suivante de 12,5 %, etc... On montre aisément que moins de 20 couches sont superposables. A cela, on doit ajouter que les couches réflectrices présentent une certaine absorption qui réduit encore les possibilités. Même si, en laboratoire, il a été possible de faire fonctionner un empilement d'une dizaine de couches, il est connu qu'actuellement la simple superposition de deux couches dans le format DVD pose des problèmes industriels.

FR-A-2 271 617 divulgue la superposition de deux couches en suggérant un déphasage égale à $\pi/2$ (1.57 Rd).

Pour résoudre ces problèmes, la Demanderesse s'est écartée de l'idée de perfectionner une structure à couches réflectrices dérivée du CD et a imaginé une structure dans laquelle chaque couche est lue en transmission à travers un motif d'éléments d'information très faiblement déphasants. L'invention permet ainsi d'obtenir une perturbation relativement importante du faisceau de lumière traversant un plan porteur d'informations tout en ne diffractant qu'une très faible part de la lumière. Dans le principe, l'invention permettrait ainsi l'empilement de quelques milliers de couches et, de manière réaliste et sans problèmes techniques de mise en oeuvre, la réalisation d'un support à une centaine de couches permettant à terme, avec la technologie de lecture de type DVD à source bleue, des capacités de stockage de l'ordre du téraoctet.

Selon l'invention (voir la revendication 1), il est donc prévu un support d'enregistrement d'informations lisibles optiquement obtenues en gravant des éléments diffractants dans au moins un plan porteur d'information, caractérisé en ce que ledit support est formé par la superposition de plans porteurs d'éléments d'informations faiblement déphasants séparés chacun du plan suivant par un milieu sensiblement transparent, ledit support étant lisible en transmission par un faisceau lumineux focalisé sur le plan à lire et traversant les autres plans et ledit milieu.

Selon une caractéristique de l'invention, le déphasage introduit par lesdits éléments d'information est inférieur à quelques dixièmes de radian.

Selon une autre caractéristique préférentielle de l'invention, chacun desdits plans porteurs d'information est réalisé à l'interface entre deux milieux diélectriques d'indices de réfraction faiblement différents, ces indices différant de quelques pourcents, et lesdits éléments d'information sont constitués par des reliefs de ladite interface.

Grâce à ces caractéristiques, on aboutit à un support facilement réalisable car, comme on le verra ultérieurement, la profondeur des reliefs à utiliser est de l'ordre de celles habituellement normalisées pour les dtsques CD ou DVD.

Selon un autre aspect de l'invention (voir la revendication 9), il est prévu un procédé de réalisation d'un support du type ci-dessus, caractérisé en ce que, sur un substrat transparent, ledit procédé comprend les étapes de :

a) disposer sur le substrat une couche de matériau monomère photopolymérisable ;

b) appliquer sur ladite couche une matrice de pressage portant les informations à enregistrer dans le plan porteur correspondant pour étaler ledit matériau ;

c) photopolymériser ledit matériau à l'aide d'une source lumineuse adéquate ;

d) répéter les étapes a), b) et c) sur chaque couche polymérisée pour obtenir de nouveaux plans porteurs d'informations.

On voit ainsi clairement que la réalisation d'un support selon l'invention consiste simplement à adapter la technologie 2P connue.

Selon encore un autre aspect de l'invention (voir 1a revendication 15), il est prévu un système optique de reproduction des informations enregistrées dans différents plans porteurs d'information d'un support d'enregistrement multicouches à lecture en transmission, lesdites informations étant enregistrées, dans chaque plan, sous la forme d'éléments d'informations faiblement déphasants et chaque couche étant constituée par un milieu sensiblement transparent, ledit système comprenant :

- des moyens d'illumination pour projeter sur ledit support un faisceau laser focalisé sur le plan à lire ;
- des moyens de réception pour collecter le faisceau après traversée dudit support ;
- des moyens détecteurs recevant le faisceau collecté par lesdits moyens de réception pour fournir un signal de lecture ;
- des moyens d'entraînement pour assurer le déplacement relatif dudit support par rapport audit faisceau laser de manière à pouvoir lire l'ensemble des informations enregistrées dans le plan à lire ;

ledit système étant caractérisé en ce que lesdits moyens détecteurs opèrent en champ lointain et en ce qu'ils sont associés à des moyens de filtrage pour ne détecter que les composantes spatiales basse fréquence du faisceau transmis.

En outre, lesdits moyens détecteurs sont de préférence prévus pour effectuer une lecture desdits éléments d'information de type push-pull.

Grâce à ces dispositions, on peut lire des informations faiblement diffractantes tout en éliminant la diaphotie avec les couches défocalisées.

L'invention sera mieux comprise et d'autres caractéristiques et avantages apparaîtront à l'aide de la description ci-après et des dessins joints où :

- la Figure 1 est un schéma de principe d'un support selon l'invention ;
- les Figures 2 et 3 sont des diagrammes illustrant les perturbations apportées dans le faisceau' lumineux par des couches d'information non focalisées ;
- la Figure 4 montre un diagramme traduisant l'effet d'une composante d'information passant dans le plan de focalisation du faisceau ;
- la Figure 5 est un schéma de principe d'un système de lecture optique selon l'invention ;
- la Figure 6 est un schéma de principe d'un système de lecture selon l'invention adapté à la lecture en réflexion ;
- la Figure 7 illustre la fonction de filtrage adoptée selon l'invention ;
- la Figure 8 est un premier mode de réalisation de filtrage à l'aide d'un filtre à transparence variable ;
- les Figures 9 et 10 montrent un autre mode de réalisation du filtrage à l'aide d'un dispositif diffractant ;
- la Figure 11 montre un positionnement avantageux selon l'invention des moyens de filtrage ;
- la Figure 12 est un schéma des circuits de traitement du signal détecté dans un système de lecture selon l'invention ;
- la Figure 13 est un mode de réalisation possible du circuit de contrôle de focalisation ;
- les Figures 14 et 15 sont des diagrammes illustrant un autre mode de contrôle de la focalisation ;
- la Figure 16 est un mode de réalisation correspondant d'un circuit de contrôle de la focalisation ; et
- les Figures 17 à 20 sont des schémas illustrant plusieurs variantes d'un procédé de réalisation de support selon l'invention.

Dans la suite de la description, on supposera que le support d'enregistrement selon l'invention est un disque ; mais il doit être clair que tout autre type de support (carte, bande, puce, etc...) est envisageable dans le cadre de l'invention.

Comme on l'a déjà expliqué brièvement ci-dessus, l'invention repose sur un nouveau concept selon lequel chaque couche d'un support d'enregistrement d'informations lisibles optiquement est lue en transmission à travers un plan d'informations très faiblement déphasantes. L'invention est basée sur la propriété de tels plans de générer une perturbation relativement importante du faisceau transmis tout en ne diffractant qu'une très faible part de la lumière qui les traverse. Ce paradoxe vient de ce que la puissance diffractée par chaque couche est proportionnelle au carré du déphasage apporté par les éléments d'information diffractants alors que l'amplitude du battement d'interférence avec le faisceau est directement proportionnelle à ce déphasage.

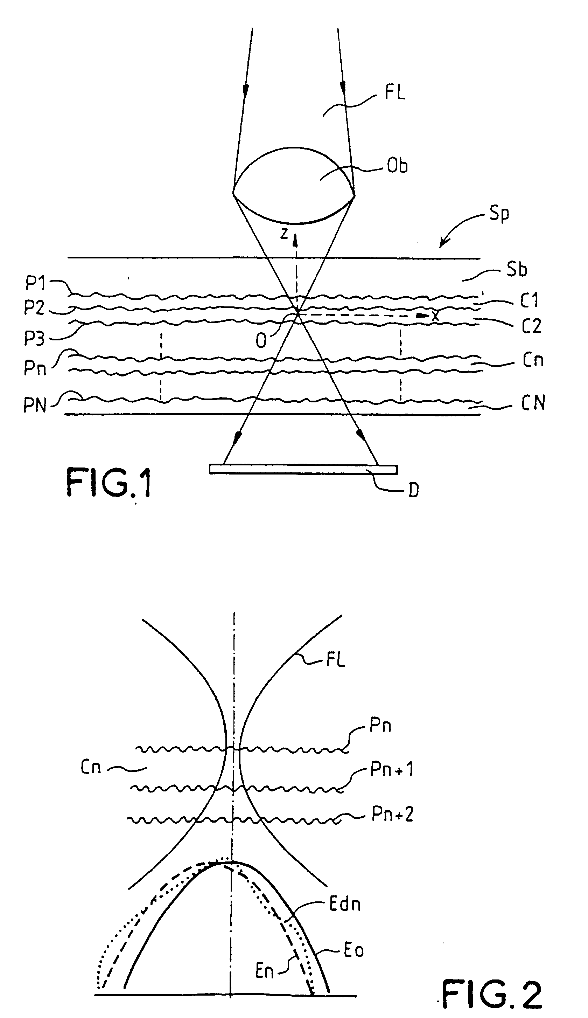

La Figure 1 illustre le principe d'un tel support Sp. Ce support est constitué par l'empilement de N couches C1 à CN à l'interface desquelles sont disposés les éléments diffractants pour former les plans porteurs d'information P1 à PN. Ces couches sont portées par un substrat transparent Sb. La lecture s'effectue à l'aide d'un faisceau laser Fl focalisé sur le plan à lire par un objectif Ob. Le faisceau transmis est reçu par un dispositif détecteur D. L'axe Oz est l'axe de focalisation du dispositif, perpendiculaire aux plans porteurs, et l'axe Ox définit la direction de déplacement tangentiel du disque.

Si l'on considère à titre d'exemple qu'un élément d'information introduit un déphasage de l'ordre de 10 mRd, celui-ci peut produire une perturbation du faisceau transmis de l'ordre de 4 % alors que la lumière diffractée n'est que de 0,01 %. On voit donc que cela permettrait théoriquement l'empilement de milliers de couches si l'épaisseur du disque ne constituait pas une limitation.

Ce phénomène peut être justifié en considérant le champ électrique associé à l'onde optique. Un déphasage de 10 mRd correspond à un champ électrique signal 100 fois inférieur au champ du faisceau incident ; mais son énergie est 10 000 fois inférieure à celle du faisceau incident et ne pourrait être détectée par des moyens classiques. Cependant, en faisant interférer ce champ électrique signal de manière constructive ou destructive avec le faisceau transmis, le signal reçu par un détecteur est de la forme $(1 + 0,01)^2$ ou respectivement $(1 - 0,01)^2$, soit une amplitude 400 fois plus grande que ce que l'on détecterait en l'absence d'interférence. Ce procédé d'interférence peut être particulièrement mis à profit grâce à une lecture du type push-pull dans laquelle les moitiés « amont-aval » du faisceau transmis sont comparées en énergie. En d'autres termes, l'amplitude de la lecture push-pull étant proportionnelle au déphasage (et non à son carré comme dans la lecture à ouverture centrale), on peut détecter de beaucoup plus petits déphasages. Par exemple, si on suppose un détecteur avec une énergie équivalente de bruit de 1000 photons et un débit de données dans la gamme des 30 Mb/s, considérant qu'une petite source laser bleue délivre $_{10}15$ photons par seconde, même un déphasage d'un milliradian fournit une modulation suffisante. En fait, il est, comme on l'a déjà indiqué, nécessaire que le déphasage des éléments d'information soit faible pour pouvoir empiler un grand nombre de couches. Mais, pour une centaine de couches traversées, on a pu constater que le signal lu ne se dégrade pas de manière significative tant que le déphasage est inférieur à environ 150 mRd. Plus précisément, dans toute la présente description, on entendra par éléments d'information « faiblement déphasants » des éléments créant un déphasage inférieur à quelques centaines de mRd.

Pratiquement, la réalisation d'un disque utilise de préférence pour les diverses couches des polymères dont les indices varient entre 1,45 et 1,6. L'apport de plastifiant dans un polymère permettant de modifier l'indice de quelques centièmes, il est possible d'obtenir un déphasage de 50 mRd en modifiant l'indice d'une couche à la suivante de 0,05 et en réalisant des reliefs de profondeur 100 nm. Cette valeur est totalement compatible avec les procédés connus de réalisation de disques optiques. Il est clair qu'il n'est pas possible d'introduire une variation d'indice de même signe à chaque interface. Aussi, de préférence, on alterne les matériaux à chaque interface, de préférence en alternant la quantité de plastifiant apportée à un même matériau polymère.

Le calcul précédent montre que l'on peut lire le disque avec un contraste de modulation de l'ordre de 20 %, très suffisant pour l'emploi d'un laser de quelques milliwatts.

Le problème que l'on peut encore se poser est celui de l'influence des couches défocalisées sur la lecture de l'information sur le plan à lire où le faisceau est focalisé, étant entendu que la lecture en transmission implique que le faisceau de lumière traverse toutes les couches.

La Figure 2 est un diagramme illustrant cette influence. On y a représenté le faisceau FI focalisé sur le plan Pn porteur d'informations. D'autre part, on a représenté dans le bas de la Figure des courbes d'éclairement résultant en champ lointain. La courbe Eo représente l'éclairement du faisceau original, la courbe En illustre le déplacement amont-aval de cet éclairement du fait de la contribution du plan Pn sur lequel on est focalisé. La courbe Edn illustre les contributions des plans défocalisés Pn + 1 et Pn + 2. Plus une couche est défocalisée et plus les fréquences spatiales des perturbations engendrées sont élevées.

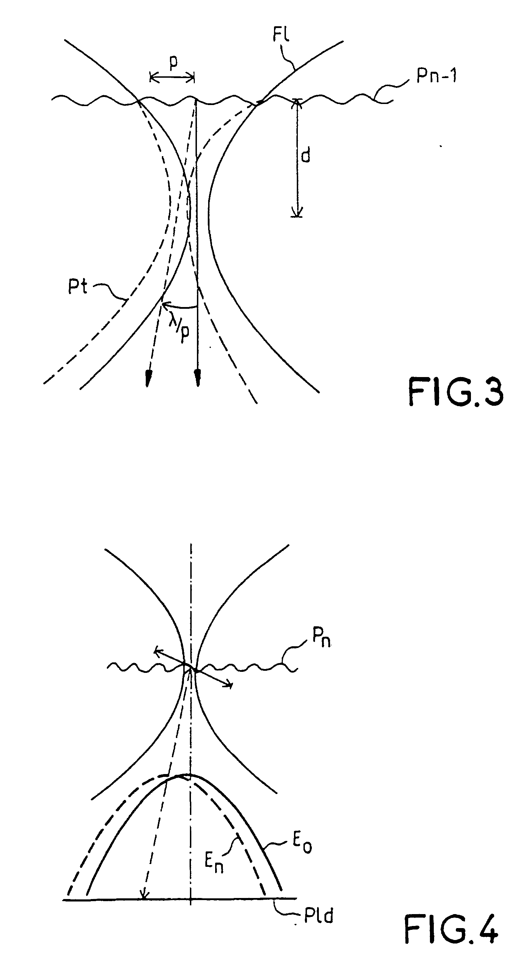

Sur la Figure 3, le diagramme représenté permet de calculer de manière plus rigoureuse la fréquence spatiale angulaire de la perturbation due à un plan Pn - 1 défocalisé d'une distance d, adjacent au plan focalisé. La traversée de ce plan par le faisceau FI génère deux ordres diffractés de directions $\pm \lambda/p$, où p désigne la période d'une composante d'information du plan Pn - 1 et $\lambda$ la longueur d'onde de la lumière utilisée. La Figure 3 montre seulement, en pointillés, l'un des ordres diffractés de la perturbation Pt. Le phénomène correspond donc à l'interférence de trois sources distantes de $\pm d$ $(\lambda/p)$ d'où une fréquence angulaire de battement $\pm d/p$. On voit donc que la fréquence angulaire de la perturbation est, en champ lointain, proportionnelle au produit de la distance de défocalisation par la fréquence spatiale enregistrée.

Selon l'invention, on élimine les perturbations parasites en ne détectant que les basses fréquences spatiales du faisceau transmis.

La Figure 4 est un diagramme traduisant l'effet d'une composante d'information passant dans le plan de focalisation. On peut voir l'effet des flancs de cette composante du plan Pn comme un déplacement angulaire du champ à l'infini de valeur $2\pi\Delta/p$ où $\Delta$ est l'amplitude de déformation du front d'onde. On retrouve l'éclairement Eo du faisceau d'origine et la contribution En du plan focalisé Pn dans le plan des détecteurs Pld. Le faisceau transmis subit donc deux types de déformations, un déplacement amont-aval significatif de l'information défilant au niveau du spot de lecture et des perturbations dont la fréquence spatiale angulaire minimale est proportionnelle à la distance minimale entre plans porteurs d'information et à la fréquence spatiale minimale de l'information. Ainsi, en assurant une distance minimale entre plans d'information et en n'enregistrant pas de composantes spectrales en dessous d'une valeur prédéterminée, on peut, comme on l'a déjà mentionné ci-dessus, éliminer la diaphotie entre couches en ne détectant que les composantes à basse fréquence angulaire du faisceau transmis.

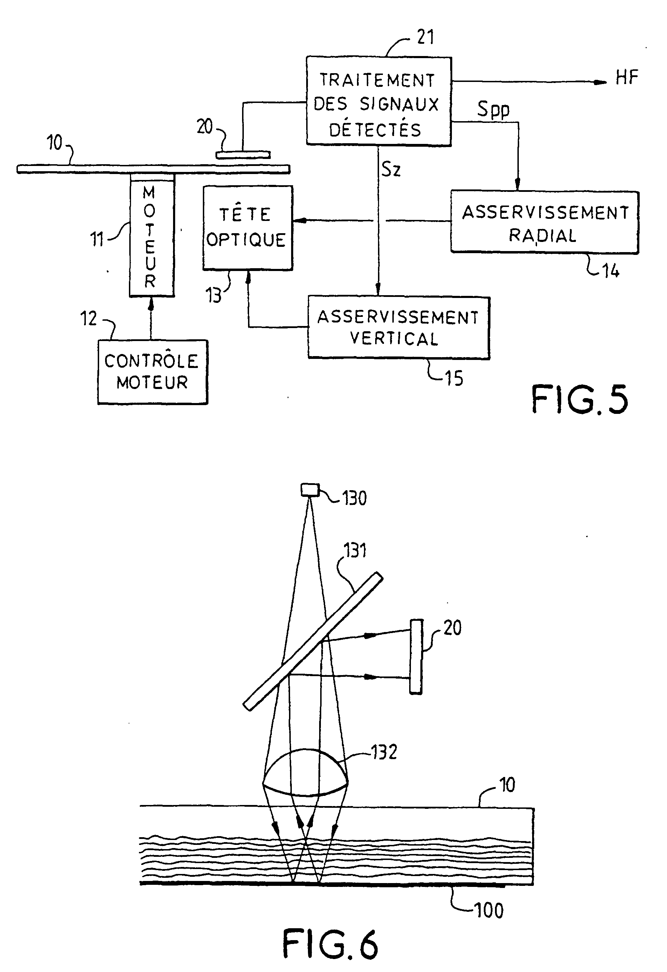

La Figure 5 est un schéma synoptique de système de lecture optique pour un support selon l'invention. Ce système pour la lecture du disque 10 comprend de manière classique un moteur 11 d'entraînement en rotation du disque 10 avec son contrôle 12, une tête optique 13 fournissant un faisceau laser focalisé et un dispositif détecteur 20. Les signaux du dispositif 20 sont envoyés à une unité de traitement de signaux 21 dont on précisera les composants ultérieurement. Cette unité 21 extrait un signal de lecture HF, un signal d'erreur de suivi radial Spp et un signal d'erreur de focalisation Sz qui sont nécessaires pour une lecture du type point à point. Le signal Spp commande un circuit d'asservissement radial 14 et le signal Sz un circuit d'asservissement de focalisation 15 qui contrôlent la tête optique 13. Dans le schéma représenté, on considère une lecture en transmission simple, les détecteurs et la tête optique étant de part et d'autre du disque.

Cependant, sans pour autant changer le caractère transmissif de la lecture, on peut en pratique utiliser la réalisation de la Figure 6 où le disque 10 a une face opposée au dioptre d'entrée métallisée et réflectrice.

Cette Figure 6 montre le disque 10 avec sa couche métallisée 100 et la tête optique utilisée. On y retrouve les éléments d'une tête traditionnelle avec une source laser 130, un objectif 132, un miroir semi-transparent 131 et des détecteurs 20. Mais, à la différence d'une tête optique classique, le faisceau n'est pas focalisé sur le plan réflecteur mais sur l'un des plans porteurs d'information. De plus, les détecteurs ne sont pas situés dans un plan proche du foyer du faisceau de retour mais sont utilisés en champ lointain.

La focalisation peut se faire avant ou après le plan réflecteur. Pour un système optique de lecture seule, il est avantageux que la focalisation s'effectue après le plan réflecteur car ainsi le faisceau de retour, ayant une section inférieure au faisceau incident est entièrement collecté par l'objectif de focalisation sans vignettage. La focalisation avant le plan réflecteur pourrait être avantageuse pour l'écriture dans un disque enregistrable car la puissance focalisée sur la couche à graver serait plus élevée.

Comme on l'a déjà expliqué, il est nécessaire, pour éliminer les perturbations dues aux couches défocalisées, de filtrer les fréquences spatiales élevées dans le faisceau collecté de manière à ne conserver que les basses fréquences angulaires. On a montré qu'une transition douce entre les parties amont et aval du détecteur convenait dans ce but.

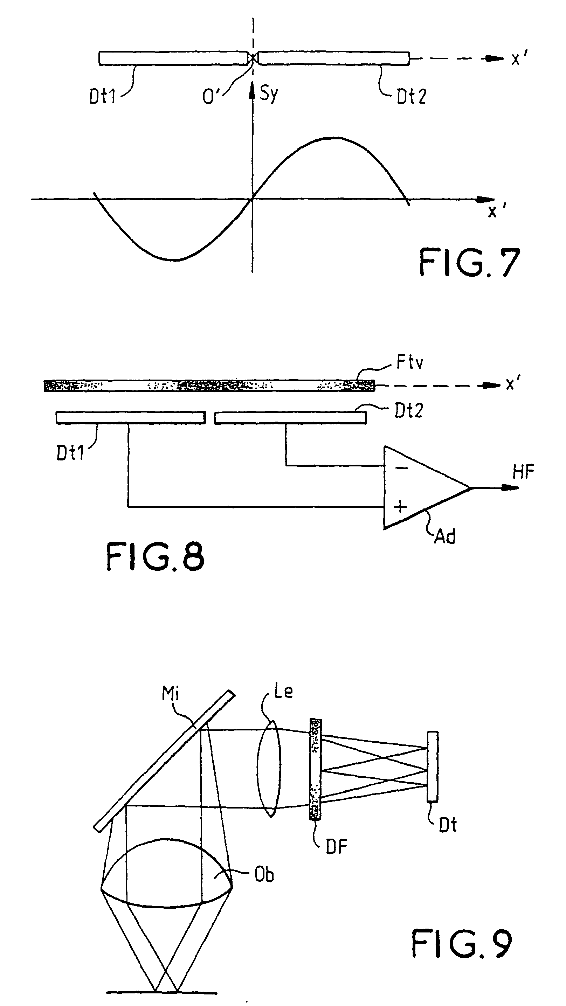

La Figure 7 illustre cette fonction en représentant, sous les détecteurs amont Dt1 et aval Dt2, un profil idéal pour la sensibilité Sy des détecteurs, l'axe O'x' étant la projection dans le plan des détecteurs de la direction Ox de déplacement des informations. Cette courbe de sensibilité de détection résultante est une courbe antisymétrique présentant donc une symétrie par rapport au centre (O') du faisceau. On obtiendrait la sensibilité maximale en faisant la différence des puissances lumineuses reçues sur les moitiés amont et aval du faisceau. Mais une transition brusque au passage d'un détecteur à l'autre aurait pour effet que les perturbations dues aux couches voisines de la couche focalisée seraient vues à la transition. Pour obtenir un lissage de la fonction push-pull et remédier à ces inconvénients, on prévoit une absorption de la partie centrale du faisceau.

La Figure 8 représente une possibilité de mise en oeuvre de ce principe. On prévoit avant les détecteurs Dt1 et Dt2 un filtre Ftv à transparence variable présentant une absorption maximum au centre et sur les bords du faisceau dans la direction O'x' (schématisée par les zones noires sur la figure), c'est-à-dire que ces zones sont constituées de bandes parallèles, perpendiculaires au plan de la Figure. Le filtre Ftv présente une transparence maximum dans une direction où l'intensité du faisceau transmis est sensiblement moitié de l'intensité au centre, c'est-à-dire' qu'elle est sensiblement centrée sur les flancs avant et arrière du faisceau.

La transition entre les zones de transparence différente est schématisée par des zones en pointillé. Pour obtenir une courbe de sensibilité se rapprochant de celle de la Figure 7, on fait d'autre part la différence entre les signaux des détecteurs amont Dt1 et aval Dt2 par un amplificateur différentiel Ad délivrant le signal de lecture push-pull HF.

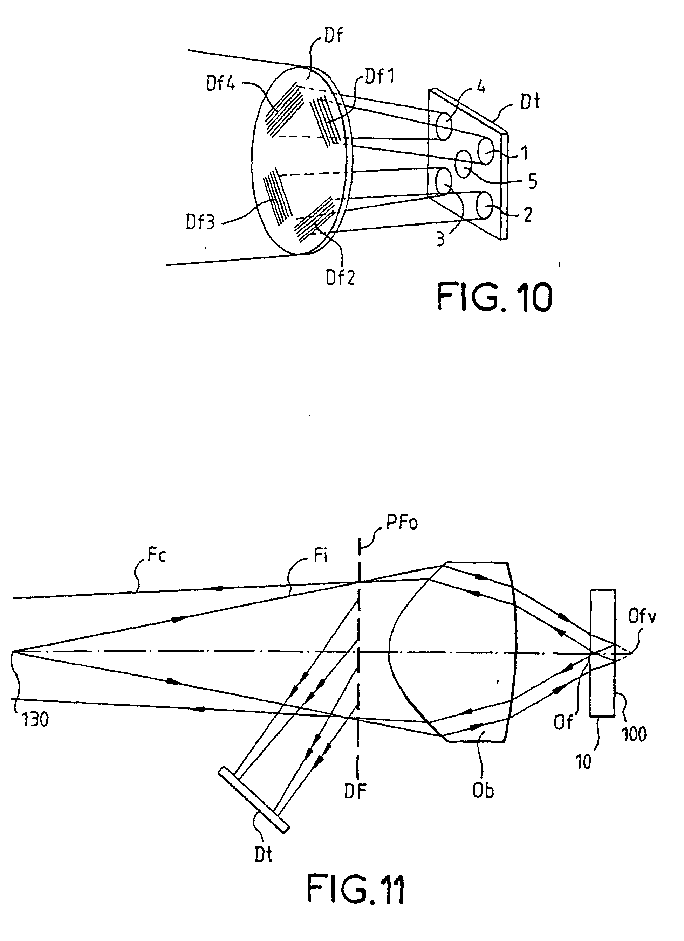

Les Figures 9 et 10 montrent un mode de réalisation particulièrement intéressant du système optique de lecture selon l'invention. Sur le trajet du faisceau collecté défléchi par le miroir semi-transparent Mi, après l'optique Le qui focalise le faisceau au voisinage des détecteurs Dt, est inséré un dispositif diffractant Df qui comprend un certain nombre d'éléments diffractants Df1 à Df4 défléchissant la lumière collectée vers des détecteurs individuels 1 à 4. Ce dispositif diffractant est ajusté pour diffracter vers les détecteurs la lumière avec l'intensité voulue pour correspondre à la fonction représentée sur la Figure 7. Il peut être réalisé de préférence sous forme holographique, de manière à déterminer individuellement' à la fois la direction des faisceaux et leur intensité. En prévoyant quatre faisceaux et quatre détecteurs convenablement disposés, on peut obtenir des signaux représentatifs des parties amont-aval et droite-gauche du faisceau, de manière à obtenir dans ce dernier cas un signal de suivi radial push-pull classique. En outre, il est possible de prévoir un cinquième faisceau central dirigé vers un détecteur 5 pour obtenir diverses informations de service (présence du disque, compatibilité disque classique, informations d'utilisation,...).

La Figure 11 permet d'illustrer un positionnement particulièrement avantageux des moyens de filtrage ou du dispositif diffractant selon l'invention. En effet, comme représenté sur la Figure 11, la section du faisceau collecté est constante, quel que soit le plan porteur d'informations sur lequel le faisceau est focalisé, dans un plan PFo à proximité de l'objectif Ob (ou son plan conjugué par le miroir semi-transparent) et après celui-ci, dans la direction de propagation du faisceau collecté Fc. Ce plan est le plan focal objet de l'objectif. On positionnera donc de préférence le dispositif diffractant Df dans ce plan. On peut d'ailleurs de préférence réaliser à l'aide du dispositif diffractant à la fois la fonction miroir et la fonction diffractante défléchissant les faisceaux vers les détecteurs individuels Dt et déterminant leur intensité.

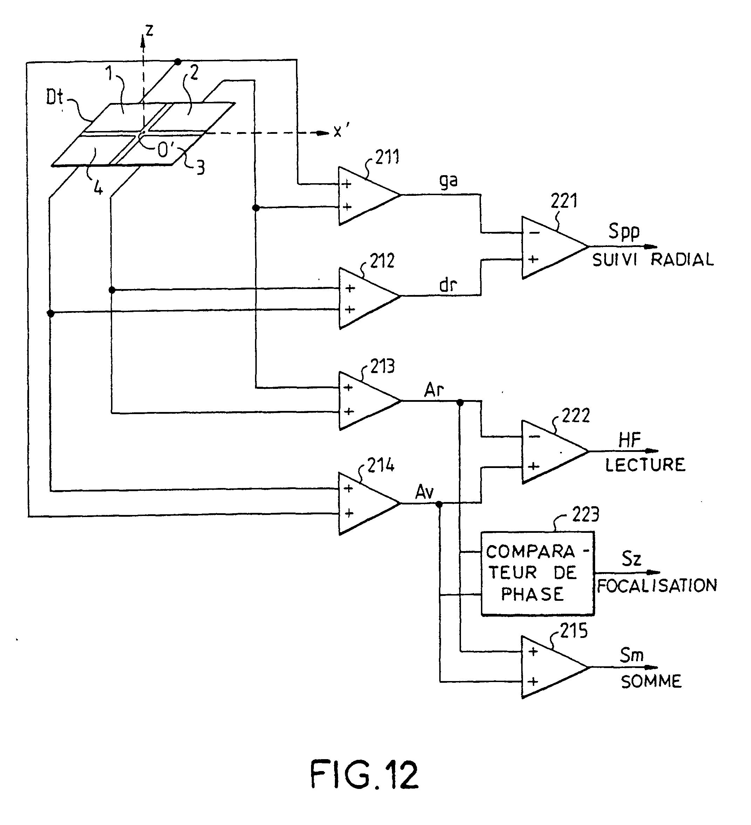

La Figure 12 est le schéma d'un mode de réalisation des circuits de traitement du signal 21 de la Figure 5, dans le cas d'un dispositif détecteur Dt à quatre détecteurs 1 à 4 classique. Ces détecteurs sont disposés dans un plan perpendiculaire à l'axe optique Oz du faisceau collecté, alignés par paires selon la projection O'x' dans ce plan de la direction de déplacement Ox du support et positionnés symétriquement par rapport audit axe optique Oz et à ladite projection O'x'. Les détecteurs 1,4 constituent les détecteurs amont et les détecteurs 2,3 les détecteurs aval. Les signaux des détecteurs 1,4 d'une part et 2,3 d'autre part sont sommés par des circuits de sommation respectivement 214 et 213 fournissant des signaux dits respectivement avant (ou amont) Av et arrière (ou aval) Ar. Les signaux des détecteurs 1,2 d'une part et 3,4 d'autre part sont sommés par des circuits de sommation respectivement 211 et 212 fournissant des signaux respectivement gauche ga et droit dr. Le signal push-pull de lecture HF est fourni par un amplificateur différentiel 222 effectuant la différence entre les signaux Av et Ar. Un signal d'erreur de suivi radial Spp est délivré par un amplificateur différentiel 221 fournissant de manière classique un signal push-pull différence entre les signaux dr et ga. Un signal d'erreur de focalisation Sz est délivré par un comparateur de phase 223 recevant les signaux Av et Ar, comme on l'expliquera ci-dessous. Enfin, un circuit de sommation 215 fournit la somme Sm de tous les signaux de détection, pour une utilisation alternative qui sera expliquée ultérieurement.

Le circuit 223 de détermination du signal d'erreur de focalisation fonctionne sur le principe suivant dérivé du système décrit dans le brevet français N° 2 280 150 proposant de focaliser le faisceau sur l'information elle-même. On peut résumer ce fonctionnement en considérant que la modulation d'amplitude sur le disque agit comme un couteau de Foucault ; son ombre se déplace dans la direction directe ou inverse de déplacement du disque quand le point de focalisation est respectivement avant ou après le plan des informations. Bien que cette solution ne soit pas directement utilisable pour un disque selon l'invention qui a seulement une pure modulation de phase, on peut cependant remarquer que le but de cette structure multicouches est que pratiquement aucune puissance lumineuse ne soit diffusée en dehors du faisceau principal par chaque couche. En conséquence la somme des puissances des moitiés amont et aval (avant et arrière) du faisceau est constante et les modulations de chaque moitié du faisceau sont exactement en opposition de phase quelle que soit la défocalisation, ce qui rendrait impossible toute utilisation de ces signaux pour corriger la défocalisation.

Cependant, on a vu que le lissage de la fonction push-pull de lecture imposait d'atténuer la sensibilité des détecteurs au centre du faisceau.

La demanderesse a constaté qu'en présence de cette absorption centrale du faisceau, il apparaît un déphasage entre les modulations avant et arrière du faisceau qui passe par la valeur $\pi$ au point de focalisation exacte. On peut donc en déduire un signal d'erreur de focalisation utilisable.

Le comparateur de phase 223 effectue cette détermination.

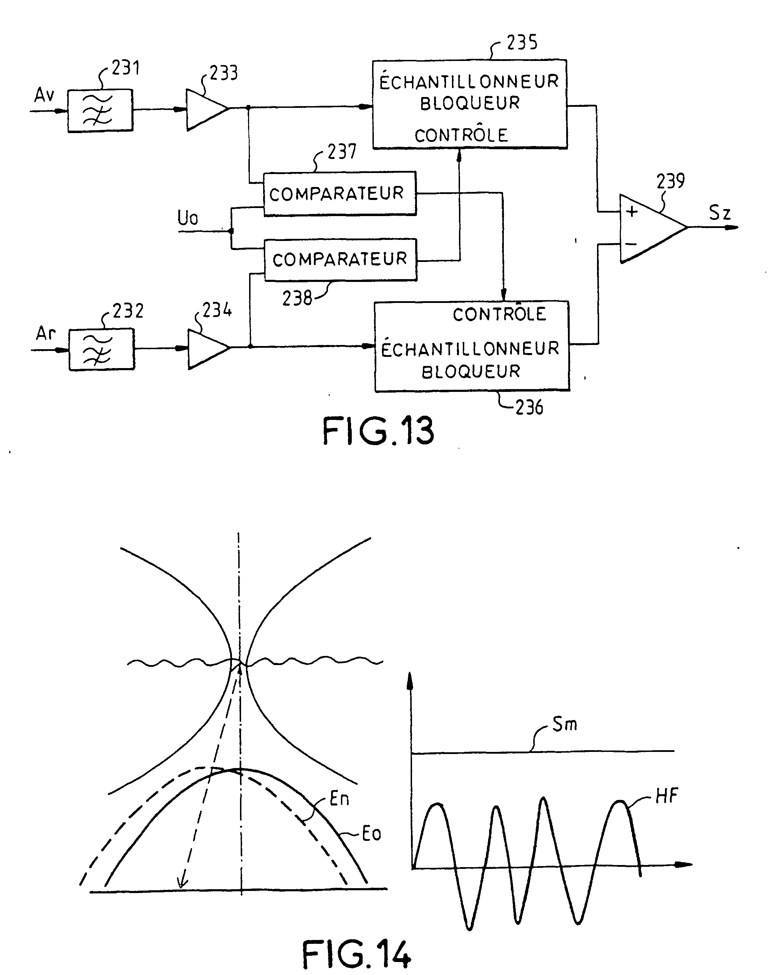

La Figure 13 est un exemple de réalisation d'un comparateur de phase délivrant le signal d'erreur de focalisation Sz. Les signaux Av et Ar subissent un filtrage passe-haut 231, 232 puis une amplification 233, 234. Ils sont ensuite envoyés à des échantillonneurs-bloqueurs' 235, 236. Ceux-ci sont contrôlés par le signal remis en forme par les comparateurs 238, 237 de l'autre voie. Un amplificateur différentiel 239 recevant les signaux des circuits 235 et 236 fournit le signal d'erreur Sz proportionnel au déphasage des signaux Av et Ar.

Une autre possibilité pour obtenir un signal d'erreur de focalisation réside dans l'utilisation du signal somme de l'ensemble des détecteurs. L'intensité au centre du faisceau transmis par le disque est, en l'absence de défocalisation, égale à l'intégrale du champ au foyer du faisceau ; cette intégrale est faiblement affectée en amplitude par la présence de reliefs faiblement déphasants. Le signal somme Sm est alors sensiblement constant comme on le voit sur la Figure 14 où le plan porteur d'informations est bien focalisé ce qui se traduit seulement par une translation en champ lointain (courbe En).

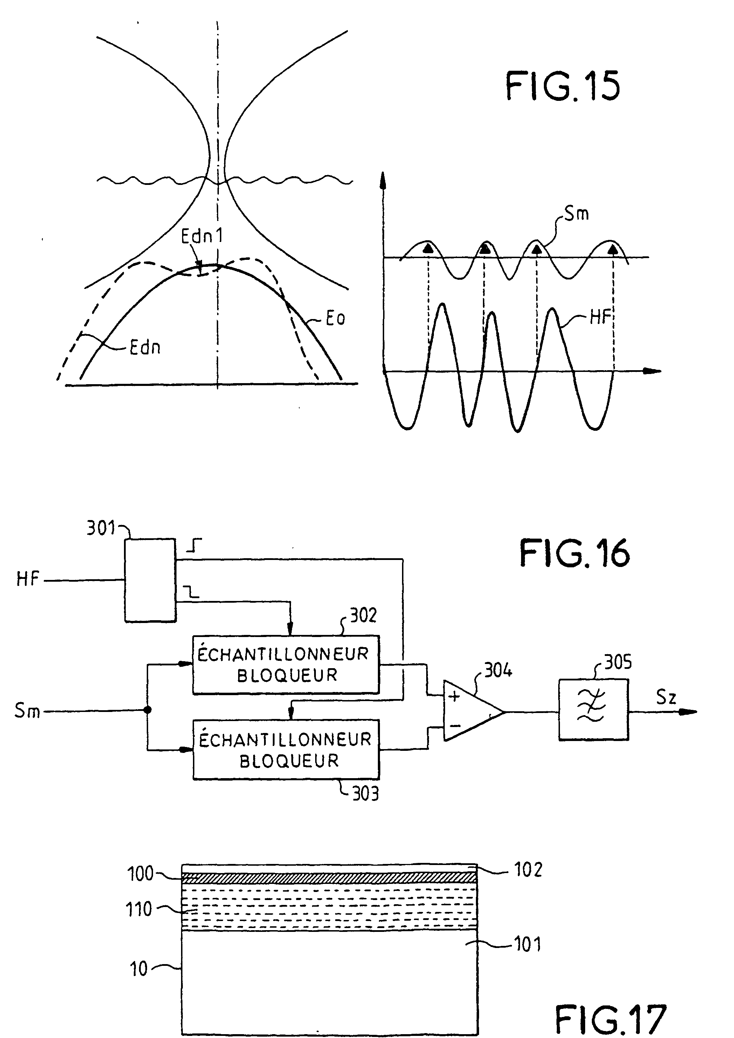

En présence d'une défocalisation significative, cette même intensité est l'intégrale d'une surface d'onde en forme de calotte sphérique pour laquelle la présence d'un point faiblement déphasant au centre de la calotte augmente ou diminue la valeur de l'intégrale suivant que ce déphasage a tendance à réduire ou amplifier la flèche de la calotte sphérique. Une réduction de la flèche se traduit par une concentration de la lumière au centre du champ lointain et donc par une diminution de la lumière vue par les détecteurs dont la sensibilité s'annule au centre. Au contraire, une augmentation de la flèche réduit l'éclairement au centre et augmente le signal somme des cellules. Ainsi, ce signal somme Sm est modulé par une composante en quadrature arrière ou avant, suivant le sens de la défocalisation, par.rapport au signal push-pull de lecture HF comme on le voit sur la Figure 15. Sur cette Figure, l'effet de la défocalisation se traduit au niveau de la courbe Edn par une translation en champ lointain accompagnée d'un creusement central Edn1.

Ainsi, le signal d'erreur de focalisation Sz peut être obtenu en comparant le signal Somme Sm (sortie de 215, Figure 12) échantillonné sur les flancs montant et descendant du signal HF (sortie de 222, Figure 12), le sens du déphasage donnant le signe de la défocalisation et l'amplitude de la composante de Sm mesurant l'importance de la défocalisation. Il est remarquable que le signe de ce signal d'erreur dépend du sens de rotation du disque mais ne dépend pas du signe de déphasage dû à la gravure.

La Figure 16 montre un exemple de circuit électronique correspondant à ce mode de détection. Les flancs montant et descendant déclenchent respectivement les échantillonneurs bloqueurs 302 et 303 dont la différence moyenne, obtenue à la sortie d'un amplificateur différentiel 304 suivi d'un filtre passe-bas 305, fournit une information de défocalisation Sz.

On a brièvement abordé la question de la réalisation pratique d'un support d'enregistrement multicouches selon l'invention. La structure générale du support 10 est à nouveau représentée sur la Figure 17. Sur un substrat transparent 101 sont disposées les N couches 110 portant à leurs interfaces les éléments d'information faiblement déphasants. On a supposé ici que le disque est lu en réflexion, en ce sens que la dernière couche est métallisée en 100 et recouverte d'un vernis protecteur 102 portant éventuellement des indications sérigraphiées.

Comme on l'a expliqué, chaque plan porteur d'information est réalisé à l'interface entre deux milieux diélectriques d'indices de réfraction faiblement différents, ce qui permet d'utiliser des profondeurs de reliefs diffractants de l'ordre de celles des disques optiques connus. Aussi, les procédés connus de réalisation de matrice, galvanoplastie et moulage peuvent être utilisés. Mais de préférence, on réalise la duplication par un procédé de photopolymérisation (2P). Comme on l'a déjà mentionné, les indices de réfraction des polymères courants varient entre 1,45 et 1,6 et peuvent être légèrement modifiés par l'apport de plastifiant. Comme il n'est pas possible d'introduire une variation d'indice de même signe à chaque interface (100 couches donneraient une augmentation d'indice de 5 pour une variation de 0,05 entre deux couches adjacentes), on alterne de préférence les matériaux à chaque interface. On peut noter qu'un avantage supplémentaire apparaît alors au niveau des signaux d'asservissement de focalisation. On peut en effet obtenir des signaux d'erreur dont le sens dépend du fait que les reliefs ont un indice plus faible ou plus fort. On peut ainsi reconnaître les couches paires et impaires et s'asservir au choix sur les unes ou les autres en alternant le sens de la boucle d'asservissement.

Il est évidemment essentiel pour l'invention de maintenir constant l'écartement entre chaque plan porteur d'informations.

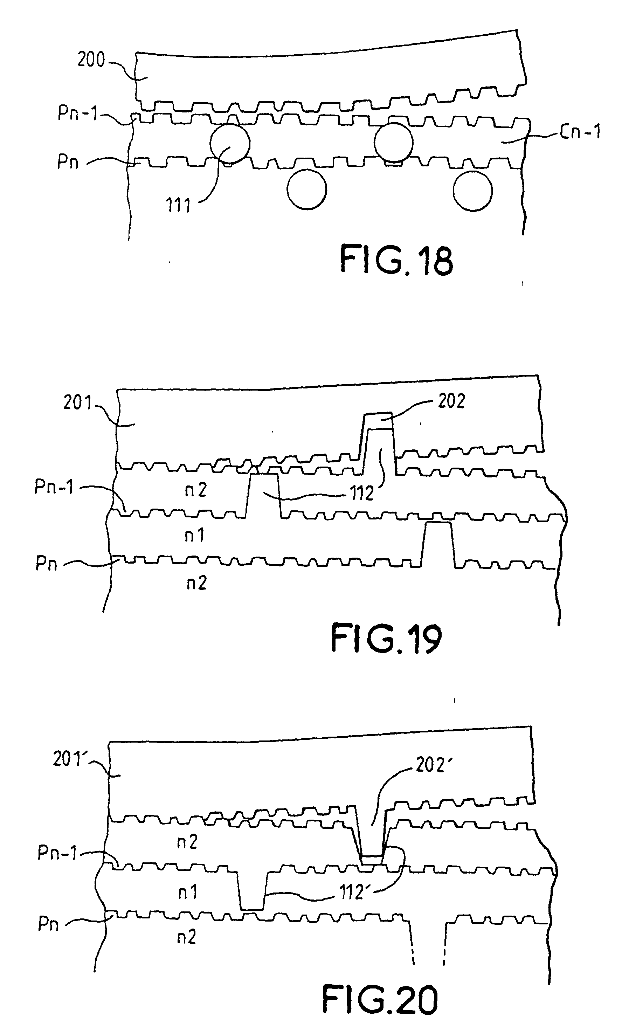

La Figure 18 montre un premier procédé pour cela. Pour former la couche Cn - 1 avec le plan porteur Pn - 1, on rajoute au monomère qu'on va étaler sur le plan Pn précédemment réalisé des micro-billes ou microcylindres calibrés 111 (semblables à ceux utilisés dans les cellules à cristal liquide). Une densité de corps calibrés de l'ordre de 100 ppm est suffisante car ces corps et le substrat peuvent résister à une pression locale de l'ordre du gigaPascal alors que la matrice 200 est appliquée sur le monomère avec une pression de l'ordre de 10 kiloPascal, suffisante pour étaler le monomère liquide et imprimer les reliefs. On procède alors à la polymérisation de la couche à l'aide d'une source lumineuse, en général ultraviolette. Puis on retire la matrice 200 et on renouvelle les opérations pour la couche Cn - 2. Le taux de défauts introduit par ces corps calibrés lors d'une lecture est faible et est corrigé grâce à un code correcteur d'erreur. Si l'indice de ces espaceurs est correctement choisi, on peut même n'introduire aucune erreur.

La Figure 19 illustre une variante du procédé de réalisation du support selon l'invention. Selon cette variante, les matrices 201 comportent des trous de profondeur calibrée 202. Après réplication, le matériau polymérisé a formé des protubérances 112 qui serviront d'espaceurs pour la réalisation de la couche suivante. La surface relative des trous ou protubérances peut être de l'ordre de 10 ppm ; ils peuvent être localisés là où il n'y a volontairement pas d'informations. Bien entendu, les trous sont positionnés différemment d'une matrice à la suivante pour éviter que les protubérances soient systématiquement en regard des trous de la matrice suivante. Comme le montre la Figure 20, les matrices 201' peuvent au contraire comporter des protubérances calibrées 202' venant s'appuyer sur le plan inférieur déjà formé et laissant des creux 112'.

En revenant au support de la Figure 17, on peut noter qu'on pourrait aussi réaliser la dernière couche recevant la métallisation 100 selon des reliefs et un format correspondant à un standard existant pour les couches lues en réflexion de manière à assurer une compatibilité pour une partie minimale de l'information ; la lecture en transmission des autres couches pourrait être assurée par la réflexion non diffractante de l'ordre zéro du faisceau qui constitue une partie suffisante pour la lecture de toutes les autres couches.

Bien entendu, l'invention n'est pas limitée aux exemples décrits et, notamment, les valeurs numériques citées peuvent varier dans une large mesure. Cependant, on peut retenir que le nombre de couches sera plutôt limité à une centaine compte tenu de la variation d'épaisseur à traverser entre la première et la dernière couche. Pour une tête optique de lecture de type DVD dans le rouge, les couches peuvent être espacées d'environ 4 μm et de 2 μm pour le futur type standard DVD bleu. Il est clair aussi que le type de lecture push-pull adopté de préférence apporte un autre avantage important, à savoir que ce type de lecture n'a pas besoin de la présence de parties lisses (« land » en anglais) entre les pistes d'où une amélioration notable de la capacité d'un disque. Dans une variante intéressante, la largeur de la piste est choisie égale à la moitié du diamètre du premier anneau noir de la tache d'Airy du faisceau de lecture. La contribution à la diaphonie des pistes adjacentes est alors minimisée.

**Revendications**

1. Support d'enregistrement d'informations lisibles optiquement en transmission portant des éléments diffractants dans au moins un plan porteur d'information, **caractérisé en ce que** ledit support (Sp ; 10) est formé par la superposition de plans (P1 à PN) porteurs d'éléments d'informations introduisant des déphasages inférieurs à quelques dixièmes de radian, séparés chacun du plan suivant par un milieu (C1 à CN) sensiblement transparent, ledit support étant lisible en transmission par un faisceau lumineux (Fi) focalisé sur le plan à lire et traversant les autres plans et ledit milieu.

2. Support d'enregistrement selon la revendication 1, **caractérisé en ce que** chacun desdits plans porteurs d'information est réalisé à l'interface entre deux milieux diélectriques d'indices de réfraction (n1, n2) faiblement différents, ces indices différant de quelques pourcents, et **en ce que** lesdits éléments d'information sont constitués par des reliefs de ladite interface.

3. Support d'enregistrement selon la revendication 2, **caractérisé en ce que** lesdits reliefs ont une profondeur de l'ordre d'une centaine de nanomètres.

4. Support d'enregistrement selon l'une des revendications 2 ou 3, **caractérisé en ce que** lesdits milieux diélectriques sont alternés d'une interface à la suivante, de manière à alterner le signe du saut d'indice d'une interface à la suivante.

5. Support d'enregistrement selon l'une des revendications 2 à 4, **caractérisé en ce que** lesdits milieux diélectriques contiennent des microbilles (111) ou microcylindres calibrés servant d'espaceurs pour maintenir constant l'espacement entre chaque plan porteur d'information.

6. Support d'enregistrement selon l'une des revendications 2 à 5, **caractérisé en ce que** chacun desdits milieux diélectriques est constitué par un matériau polymère.

7. Support d'enregistrement selon la revendication 6, **caractérisé en ce que** lesdits milieux diélectriques sont constitués par un même matériau polymère et **en ce que** le contrôle de l'indice de réfraction de chaque couche est réalisé par l'adjonction prédéterminée de plastifiant.

8. Support d'enregistrement selon l'une des revendications précédentes, **caractérisé en ce que** l'une des faces extérieures du support est métallisée (100) pour permettre une lecture par réflexion à partir de l'autre face du support.

9. Procédé de réalisation d'un support selon l'une des revendications 1 à 7, **caractérisé en ce que**, sur un substrat transparent, ledit procédé comprend les étapes de :

   a) disposer sur le substrat une couche de matériau monomère photopolymérisable ;
   b) appliquer sur ladite couche une matrice de pressage portant les informations à enregistrer dans le plan porteur correspondant pour étaler ledit matériau ;
   c) photopolymériser ledit matériau à l'aide d'une source lumineuse adéquate ;
   d) répéter les étapes a), b) et c) sur chaque couche polymérisée pour obtenir de nouveaux plans porteurs d'informations.

10. Procédé de réalisation d'un support selon la revendication 9, **caractérisé en ce que**, dans le matériau monomère de chaque couche, on rajoute des microbilles (111) ou microcylindres calibrés pour assurer un écartement prédéterminé entre chaque plan porteur d'information.

11. Procédé de réalisation d'un support selon la revendication 9, **caractérisé en ce que** chaque matrice de pressage (201) comporte des trous (202) de profondeur calibrée de manière à constituer, après photopolymérisation, des protubérances (112) permettant de positionner la matrice de pressage suivante, le positionnement desdits trous étant différent d'une matrice à la suivante.

12. Procédé de réalisation d'un support selon la revendication 9, **caractérisé en ce que** chaque matrice de pressage (201') comporte des protubérances (202') de hauteur calibrée de manière à permettre de positionner ladite matrice de pressage par rapport au plan porteur d'informations (Pn-1) précédemment réalisé.

13. Procédé de réalisation d'un support selon l'une des revendications 9 à 12, **caractérisé en ce que** la dernière couche du support est métallisée et protégée par un vernis pour que ledit support soit lu en réflexion.

**14.** Procédé de réalisation d'un support selon la revendication 13, **caractérisé en ce que** ladite couche métallisée est porteuse d'informations selon un standard classique pour les couches lues en réflexion.

**15.** Système optique de reproduction des informations enregistrées dans différents plans (P1 à PN) porteurs d'information d'un support d'enregistrement multicouches à lecture en transmission, lesdites informations étant enregistrées, dans chaque plan, sous la forme d'éléments d'informations introduisant des déphasages inférieurs à quelques dixièmes de radian, et chaque couche étant constituée par un milieu sensiblement transparent, ledit système comprenant :

- des moyens d'illumination (130 à 132 ; Mi, Ob) pour projeter sur ledit support un faisceau laser (FI) focalisé sur le plan à lire ;
- des moyens de réception (Ob ; 131,132) pour collecter le faisceau après traversée dudit support ;
- des moyens détecteurs (20 ; Dt) recevant le faisceau collecté par lesdits moyens de réception pour fournir un signal de lecture ;
- des moyens d'entraînement (11,12) pour assurer le déplacement relatif dudit support par rapport audit faisceau laser de manière à pouvoir lire l'ensemble des informations enregistrées dans le plan à lire ; ledit système étant **caractérisé en ce que** lesdits moyens détecteurs opèrent en champ lointain et **en ce qu'**ils sont associés à des moyens de filtrage (Ftv ; Df) pour ne détecter que les composantes spatiales basse fréquence du faisceau transmis.

**16.** Système optique selon la revendication 15, **caractérisé en ce que** lesdits moyens détecteurs sont prévus en outre pour effectuer une lecture desdits éléments d'information de type push-pull.

**17.** Système optique selon l'une des revendications 15 ou 16, **caractérisé en ce que** lesdits moyens de filtrage sont prévus pour assurer une courbe de sensibilité antisymétrique de détection résultante présentant une valeur sensiblement nulle autour du centre du faisceau et sur ses bords et une symétrie par rapport à ce centre.

**18.** Système optique selon la revendication 17, **caractérisé en ce que** lesdits moyens détecteurs comportent au moins deux détecteurs (Dt1, Dt2), disposés dans un plan perpendiculaire à l'axe optique (Oz) du faisceau collecté, alignés selon la projection (O'x') dans ce plan de la direction de déplacement du support et positionnés symétriquement par rapport audit axe optique, **en ce que** lesdits moyens de filtrage sont constitués par un filtre à transparence variable (Ftv), ayant une transparence sensiblement nulle au centre et sur ses bords et une transparence maximum centrée sur les flancs avant et arrière du faisceau transmis ou réfléchi par le support et **en ce que** des moyens de comparaison de la phase des signaux des deux détecteurs sont prévus pour fournir un signal qui constitue un signal d'erreur de focalisation destiné à commander la focalisation du faisceau fourni par lesdits moyens d'illumination.

**19.** , Système optique selon l'une des revendications 16 ou 17, **caractérisé en ce que** lesdits moyens détecteurs comportent quatre détecteurs (1 à 4), disposés dans un plan perpendiculaire à l'axe optique du faisceau collecté, alignés par paires selon la projection dans ce plan de la direction de déplacement du support et positionnés symétriquement par rapport audit axe optique et à ladite projection, et **en ce que** ledit système comprend en outre :

- deux premiers circuits électroniques de sommation (214,213) pour sommer respectivement les signaux des paires (1,4 ; 2, 3) de détecteurs symétriques par rapport à ladite projection ;
- un premier amplificateur différentiel (222) recevant les sommes (Av, Ar) desdits deux premiers circuits pour en fournir la différence qui constitue un signal HF de lecture des informations enregistrées dans le plan à lire ;
- des moyens (223) de comparaison de la phase des signaux des deux premiers circuits de sommation pour fournir un signal qui constitue un signal d'erreur de focalisation (Sz) destiné à commander la focalisation du faisceau fourni par lesdits moyens d'illumination ;
- deux seconds circuits électroniques de sommation (211,212) pour sommer respectivement les signaux des paires (1,2 ; 3,4) de détecteurs de part et d'autre de ladite projection ;
- un second amplificateur différentiel (221) recevant les sommes desdits deux seconds circuits pour en fournir la différence qui constitue un signal de suivi radial (Spp) des informations à lire.

**20.** Système optique selon l'une des revendications 16 ou 17, **caractérisé en ce que** lesdits moyens détecteurs comportent quatre détecteurs (1 à 4), disposés dans un plan perpendiculaire à l'axe optique du faisceau collecté, alignés par paires selon la projection dans ce plan de la direction de déplacement du support et positionnés symétriquement par rapport audit axe optique et à ladite projection, et **en ce que** ledit système comprend en outre :

- deux premiers circuits électroniques de sommation (214,213) pour sommer respectivement les signaux des paires (1, 4 ; 2, 3) de détecteurs symétriques par rapport à ladite projection ;
- un premier amplificateur différentiel (222) recevant les sommes (Av, Ar) desdits deux premiers circuits pour en fournir la différence qui constitue un signal HF de lecture des informations enregistrées dans le plan à lire ;
- deux seconds circuits électroniques de sommation (211,212) pour sommer respectivement les signaux des paires (1, 2 ; 3, 4) de détecteurs de part et d'autre de ladite projection ;
- un second amplificateur différentiel (221) recevant les sommes desdits deux seconds circuits pour en fournir la différence qui constitue un signal de suivi radial (Spp) des informations à lire ;
- un troisième circuit électronique de sommation (215) pour sommer les signaux des quatre détecteurs ;
- des moyens pour détecter la composante du signal somme délivré par ledit troisième circuit qui est en quadrature avec ledit signal HF de lecture délivré par le premier amplificateur différentiel, pour en déduire un signal d'erreur de focalisation destiné à commander la focalisation du faisceau fourni par lesdits moyens d'illumination.

**21.** Système optique selon l'une des revendications 19 ou 20, **caractérisé en ce que** lesdits moyens de filtrage sont constitués par un filtre à transparence variable (Ftv).

**22.** Système optique selon l'une des revendications 16, 17, 19 ou 20, **caractérisé en ce que** lesdits moyens de filtrage sont constitués par un dispositif diffractant (Df), disposé sur le trajet du faisceau collecté, **tel** que l'intensité diffractée corresponde à ladite courbe de sensibilitéprédéterminée,

**23.** Système optique selon la revendication 22, **caractérisé en ce que** ledit dispositif diffractant comporte plusieurs éléments diffractants (Df1 à Df4) pour décomposer ledit faisceau collecté en une série de faisceaux individuels dirigés respectivement vers lesdits détecteurs (1 à 4).

**24.** Système optique selon la revendication 23, **caractérisé en ce que** ledit dispositif diffractant comprend en outre un élément supplémentaire envoyant la partie centrale du faisceau collecté sur un détecteur (5) supplémentaire pour fournir des informations de service.

**25.** Système optique selon l'une des revendications 22 à 24, dans lequel lesdits moyens d'illumination et lesdits moyens de réception comprennent un objectif commun (Ob) servant à la fois à focaliser le faisceau laser (Fi) sur le plan à lire et à collecter ce faisceau (Fc) après traversée dudit support, **caractérisé en ce que** ledit dispositif diffractant est positionné sensiblement dans le plan focal objet (PFo) de l'objectif, après celui-ci dans la direction de propagation du faisceau collecté.

**Patentansprüche**

**1.** Aufzeichnungsträger für im Transmissionsmodus optisch lesbare Informationen, der in mindestens einer Informationsträgerebene beugende Elemente trägt, **dadurch gekennzeichnet, dass** der Träger (Sp; 10) durch die Übereinanderanordnung von Informationselemente tragenden Ebenen (P1 bis PN) gebildet wird, die Phasenverschiebungen von weniger als einigen Zehntel Radiant einführen, und je von der folgenden Ebene durch ein im Wesentlichen transparentes Medium (C1 bis CN) getrennt sind, wobei der Träger im Transmissionsodus von einem Lichtstrahl (Fi) lesbar ist, der auf die zu lesende Ebene fokussiert ist und die anderen Ebenen und das Medium durchquert.

**2.** Aufzeichnungsträger nach Anspruch 1, **dadurch gekennzeichnet, dass** jede der Informationsträgerebenen an der Schnittstelle zwischen zwei dielektrischen Medien mit geringfügig unterschiedlichen Brechungsindices (n1, n2) erzeugt wird, wobei diese Indices sich um einige Prozent unterscheiden, und dass die Informationselemente aus Reliefs der Schnittstelle bestehen.

**3.** Aufzeichnungsträger nach Anspruch 2, **dadurch gekennzeichnet, dass** die Reliefs eine Tiefe in der Größenordnung von etwa hundert Nanometern haben.

**4.** Aufzeichnungsträger nach einem der Ansprüche 2 oder 3, **dadurch gekennzeichnet, dass** die dielektrischen Medien von einer Schnittstelle zur anderen abwechseln, um das Vorzeichen des Stufenindex von einer Schnittstelle zur anderen wechseln.

**5.** Aufzeichnungsträger nach einem der Ansprüche 2 bis 4, **dadurch gekennzeichnet, dass** die dielektrischen Medien Mikrokügelchen (111) oder kalibrierte Mikrozylinder enthalten, die als Abstandshalter dienen, um den Abstand zwischen allen Informationsträgerebenen konstant zu halten.

**6.** Aufzeichnungsträger nach einem der Ansprüche 2 bis 5, **dadurch gekennzeichnet, dass** jedes der dielektrischen Medien aus einem Polymermaterial besteht.

**7.** Aufzeichnungsträger nach Anspruch 6, **dadurch gekennzeichnet, dass** die dielektrischen Medien aus dem gleichen Polymermaterial bestehen, und dass die Steuerung des Brechungsindex jeder Schicht durch die vorbestimmte Hinzufügung von Weichmacher durchgeführt wird.

**8.** Aufzeichnungsträger nach einem der vorhergehenden Ansprüche, **dadurch gekennzeichnet, dass** eine der Außenflächen des Trägers metallbeschichtet (100) ist, um ein Lesen durch Reflexion ausgehend von der anderen Fläche des Trägers zu ermöglichen.

**9.** Verfahren zur Herstellung eines Trägers nach einem der Ansprüche 1 bis 7, **dadurch gekennzeichnet, dass** auf einem transparenten Substrat das Verfahren folgende Schritte aufweist:

a) Anordnen einer Schicht eines photopolymerisierbaren Monomermaterials auf dem Substrat;

b) Aufbringen einer die in der entsprechenden Trägerebene aufzuzeichnenden Informationen tragenden Pressmatrix auf die Schicht, um das Material auszubreiten;

c) Photopolymerisieren des Materials mit Hilfe einer geeigneten Lichtquelle;

d) Wiederholen der Schritte a), b) und c) an jeder polymerisierten Schicht, um neue Informationsträgerebenen zu erhalten.

**10.** Verfahren zur Herstellung eines Trägers nach Anspruch 9, **dadurch gekennzeichnet, dass** man in das Monomermaterial jeder Schicht Mikrokügelchen (111) oder kalibrierte Mikrozylinder hinzufügt, um einen vorbestimmten Abstand zwischen jeder Informationsträgerebene zu gewährleisten.

**11.** Verfahren zur Herstellung eines Trägers nach Anspruch 9, **dadurch gekennzeichnet, dass** jede Pressmatrix (201) Löcher (202) von kalibrierter Tiefe aufweist, um nach der Photopolymerisierung Ausstülpungen (112) zu bilden, die es ermöglichen, die folgende Pressmatrix zu positionieren, wobei die Positionierung der Löcher sich von einer Matrix zur nächsten unterscheidet.

**12.** Verfahren zur Herstellung eines Trägers nach Anspruch 9, **dadurch gekennzeichnet, dass** jede Pressmatrix (201') Ausstülpungen (202') von kalibrierter Höhe aufweist, um die Positionierung der Pressmatrix bezüglich der vorher hergestellten Informationsträgerebene (Pn-1) zu ermöglichen.

**13.** Verfahren zur Herstellung eines Trägers nach einem der Ansprüche 9 bis 12, **dadurch gekennzeichnet, dass** die letzte Schicht des Trägers metallbeschichtet ist und von einem Lack geschützt wird, damit der Träger im Reflexionsmodus gelesen wird.

**14.** Verfahren zur Herstellung eines Trägers nach Anspruch 13, **dadurch gekennzeichnet, dass** die metallbeschichtete Schicht ein Informationsträger gemäß einer für die im Reflexionsmodus gelesenen Schichten üblichen Norm ist.

**15.** Optisches System zur Wiedergabe von Informationen, die in verschiedenen Informationsträgerebenen (P1 bis PN) eines mehrschichtigen Aufzeichnungsträgers mit Lesen im Transmissionsmodus aufgezeichnet wurden, wobei die Informationen in jeder Ebene in Form von Informationselementen aufgezeichnet werden, die Phasenverschiebungen von weniger als einigen Zehntel Radiant einführen, und wobei jede Schicht aus einem im Wesentlichen transparenten Medium besteht, wobei das System aufweist:

- Beleuchtungsmittel (130 bis 132; Mi, Ob), um auf den Träger einen auf die zu lesende Ebene fokussierten Laserstrahl (FI) zu projizieren;
- Empfangsmittel (Ob; 131, 132), um den Strahl nach Durchquerung des Trägers zu erfassen;
- Detektormittel (20; Dt), die den von den Empfangsmitteln erfassten Strahl empfangen, um ein Lesesignal zu liefern;
- Antriebsmittel (11, 12), um die relative Verschiebung des Trägers bezüglich des Laserstrahls derart zu gewährleisten, dass die Gesamtheit der in der zu lesenden Ebene aufgezeichneten Informationen gelesen werden kann;

wobei das System **dadurch gekennzeichnet ist, dass** die Detektormittel im fernen Feld arbeiten, und dass sie Filtermitteln (Ftv; Df) zugeordnet sind, um nur die niederfrequenten räumlichen Komponenten des transmittierten Strahls zu erfassen.

**16.** Optisches System nach Anspruch 15, **dadurch gekennzeichnet, dass** die Erfassungsmittel außerdem vorgesehen sind, um ein Lesen der Informationselemente vom Typ push-pull durchzuführen.

**17.** Optisches System nach einem der Ansprüche 15 oder 16, **dadurch gekennzeichnet, dass** die Filtermittel vorgesehen sind, um eine resultierende antisymmetrische Detektorempfindlichkeitskurve zu gewährleisten, die einen Wert von im Wesentlichen Null um das Zentrum des Strahls herum und an seinen Rändern und eine Symmetrie bezüglich dieses Zentrums aufweist.

**18.** Optisches System nach Anspruch 17, **dadurch ge-**

**kennzeichnet, dass** die Detektormittel mindestens zwei Detektoren (Dtl, Dt2) aufweisen, die in einer Ebene senkrecht zur optischen Achse (Oz) des erfassten Strahls angeordnet sind, in dieser Ebene gemäß der Projektion (O'x') der Verschieberichtung des Trägers fluchten, und bezüglich der optischen Achse symmetrisch positioniert sind, dass die Filtermittel aus einem Filter mit variabler Transparenz (Ftv) bestehen, das im Zentrum und an seinen Rändern eine Transparenz im Wesentlichen gleich Null, und auf die Vorder- und Rückflanken des vom Träger transmittierten oder reflektierten Strahls zentriert eine maximale Transparenz aufweist, und dass Mittel zum Vergleich der Phase der Signale der beiden Detektoren vorgesehen sind, um ein Signal zu liefern, dass ein Fokussierfehlersignal bildet, das dazu bestimmt ist, die Fokussierung des von den Beleuchtungsmitteln gelieferten Strahls zu steuern.

19. Optisches System nach einem der Ansprüche 16 oder 17, **dadurch gekennzeichnet, dass** die Detektormittel vier Detektoren (1 bis 4) aufweisen, die in einer Ebene senkrecht zur optischen Achse des erfassten Strahls angeordnet sind, in dieser Ebene gemäß der Projektion der Verschieberichtung des Trägers paarweise fluchten, und symmetrisch bezüglich der optischen Achse und der Projektion positioniert sind, und dass das System außerdem aufweist:

   - zwei erste elektronische Summierschaltungen (214, 213), um je die Signale der Paare (1, 4; 2, 3) von bezüglich der Projektion symmetrischen Detektoren zu summieren;

   - einen ersten Differenzverstärker (222), der die Summen (Av, Ar) der beiden ersten Schaltungen empfängt, um daraus die Differenz zu liefern, die ein HF-Lesesignal der in der zu lesenden Ebene aufgezeichneten Informationen darstellt;

   - Mittel (223) zum Vergleich der Phase der Signale der beiden ersten Summierschaltungen, um ein Signal zu liefern, das ein Fokussierfehlersignal (Sz) bildet, das dazu bestimmt ist, die Fokussierung des von den Beleuchtungsmitteln gelieferten Strahls zu steuern;

   - zwei zweite elektronische Summierschaltungen (211, 212), um je die Signale der Paare (1, 2; 3, 4) von Detektoren zu beiden Seiten der Projektion zu summieren;

   - einen zweiten Differenzverstärker (221), der die Summen der beiden zweiten Schaltungen empfängt, um daraus die Differenz zu liefern, die ein radiales Nachführsignal (Spp) der zu lesenden Informationen bildet.

20. Optisches System nach einem der Ansprüche 16 oder 17, **dadurch gekennzeichnet, dass** die Detektormittel vier Detektoren (1 bis 4) aufweisen, die in einer Ebene senkrecht zur optischen Achse des erfassten Strahls angeordnet sind, in dieser Ebene gemäß der Projektion der Verschieberichtung des Trägers paarweise fluchten, und symmetrisch bezüglich der optischen Achse und der Projektion positioniert sind, und dass das System außerdem aufweist:

   - zwei erste elektronische Summierschaltungen (214, 213), um je die Signale der Paare (1, 4; 2, 3) von bezüglich der Projektion symmetrischen Detektoren zu summieren;

   - einen ersten Differenzverstärker (222), der die Summen (Av, Ar) der beiden ersten Schaltungen empfängt, um daraus die Differenz zu liefern, die ein HF-Lesesignal der in der zu lesenden Ebene aufgezeichneten Informationen darstellt;

   - zwei zweite elektronische Summierschaltungen (211, 212) um je die Signale der Paare (1, 2; 3, 4) von Detektoren zu beiden Seiten der Projektion zu summieren;

   - einen zweiten Differenzverstärker (221), der die Summen der beiden zweiten Schaltungen empfängt, um daraus die Differenz zu liefern, die ein radiales Nachführsignal (Spp) der zu lesenden Informationen bildet;

   - eine dritte elektronische Summierschaltung (215), um die Signale der vier Detektoren zu summieren;

   - Mittel, um die Komponente des von der dritten Schaltung gelieferten Summensignals zu erfassen, die zum vom ersten Differenzverstärker gelieferten HF-Lesesignal um 90° phasenverschoben ist, um daraus ein Fokussierfehlersignal abzuleiten, das dazu bestimmt ist, die Fokussierung des von den Beleuchtungsmitteln gelieferten Strahls zu steuern.

21. Optisches System nach einem der Ansprüche 19 oder 20, **dadurch gekennzeichnet, dass** die Filtermittel aus einem Filter mit variabler Transparenz (Ftv) bestehen.

22. Optisches System nach einem der Ansprüche 16, 17, 19 oder 20, **dadurch gekennzeichnet, dass** die Filtermittel aus einer Beugevorrichtung (Df) bestehen, die so auf dem Weg des erfassten Strahls angeordnet ist, dass die gebeugte Intensität der vorbestimmten Empfindlichkeitskurve entspricht.

23. Optisches System nach Anspruch 22, **dadurch gekennzeichnet, dass** die Beugevorrichtung mehrere beugende Elemente (Dfl bis Df4) aufweist, um den erfassten Strahl in eine Reihe von einzelnen Strahlen zu zerlegen, die je auf die Detektoren (1 bis 4) gerichtet werden.

**24.** Optisches System nach Anspruch 23, **dadurch gekennzeichnet, dass** die Beugevorrichtung außerdem ein zusätzliches Element aufweist, das den zentralen Teil des erfassten Strahls zu einem zusätzlichen Detektor (5) sendet, um Dienstinformationen zu liefern.

**25.** Optisches System nach einem der Ansprüche 22 bis 24, bei dem die Beleuchtungsmittel und die Empfangsmittel ein gemeinsames Objektiv (Ob) aufweisen, das sowohl zur Fokussierung des Laserstrahls (Fi) auf die zu lesende Ebene als auch zur Erfassung dieses Strahls (Fc) nach Durchquerung des Trägers dient, **dadurch gekennzeichnet, dass** die Beugevorrichtung im Wesentlichen in der Objekt-Fokussierebene (PFo) des Objektivs hinter diesem in der Ausbreitungsrichtung des erfassten Strahls positioniert ist.

**Claims**

**1.** Recording medium support for information optically readable in transmission bearing diffracting elements in at least one information-bearing plane, **characterized in that** the said medium support (Sp; 10) is formed by the superposition of planes ($P_1$ to $P_N$) bearing information elements that introduce phase shifts of less than a few tenths of a radian, each being separated from the following plane by a substantially transparent medium ($C_1$ to $C_N$), the said medium support being readable in transmission by a light beam ($B_i$) focused onto the plane to be read and passing through the other planes and the said medium.

**2.** Recording medium support according to Claim 1, **characterized in that** each of the said information-bearing planes is produced at the interface between two dielectric media of slightly different refractive indices ($n_1$, $n_2$), these indices differing by a few per cent, and **in that** the said information elements are formed by pits at the said interface.

**3.** Recording medium support according to Claim 2, **characterized in that** the said pits have a depth of the order 'of one hundred nanometres.

**4.** Recording medium support according to either of Claims 2 and 3, **characterized in that** the said dielectric media alternate from one interface to the next, so as to alternate the sign of the index jump from one interface to the next.

**5.** Recording medium support according to one of Claims 2 to 4, **characterized in that** the said dielectric media contain calibrated microspheres (11) or microcylinders serving as spacers for keeping the spacing between each information-bearing plane constant.

**6.** Recording medium support according to one of Claims 2 to 5, **characterized in that** each of the said dielectric media is formed by a polymer material.

**7.** Recording medium support according to Claim 6, **characterized in that** the said dielectric media are formed by one and the same polymer material and **in that** the refractive index of each layer is controlled by the predetermined addition of plasticizer.

**8.** Recording medium support according to one of the preceding claims, **characterized in that** one of the external faces of the medium support is metallized (100) so as to allow reading by reflection off the other face of the medium support.

**9.** Method for producing a medium support according to one of Claims 1 to 7, **characterized in that** the said method comprises, on a transparent substrate, the steps of:

> a) placing a layer of photocurable monomer material on the substrate;
> b) applying a pressing die, which bears the information to be recorded in the corresponding bearing plane, on the said layer in order to spread the said material;
> c) photocuring the said material using a suitable light source;
> d) repeating steps a), b) and c) on each cured layer in order to obtain further information-bearing planes.

**10.** Method for producing a medium support according to Claim 9, **characterized in that** calibrated microspheres (111) or microcylinders are added to the monomer material of each layer in order to provide a predetermined spacing between each information-bearing plane.

**11.** Method for producing a medium support according to Claim 9, **characterized in that** each pressing die (201) has holes (202) of calibrated depth so as to form, after photocuring, protuberances (112) positioning the next pressing die, the way the said holes are positioned being different from one die to the next.

**12.** Method for producing a medium support according to Claim 9, **characterized in that** each pressing die (201') includes protuberances (202') of calibrated height so as to allow the said pressing die to be positioned relative to the previously produced information-bearing plane ($P_{n-1}$).

13. Method for producing a medium support according to one of Claims 9 to 12, **characterized in that** the final layer of the medium support is metallized and protected by a varnish so that the said medium support is read in reflection.

14. Method for producing a medium support according to Claim 13, **characterized in that** the said metallized layer bears information according to a classic standard for the layers that are read in reflection.

15. Optical system for reproducing the information recorded in various information-bearing planes ($P_1$ to $P_N$) of a multilayer recording medium support to be read in transmission, the said information being recorded, in each plane, in the form of information elements that introduce phase shifts of less than a few tenths of a radian, and each layer being formed by a substantially transparent medium, the said system comprising:

    - illumination means (130 to 132; Mi, Ob) for projecting onto the said medium support a laser beam (LB) focused onto the plane to be read;
    - receiving means (Ob; 131, 132) for collecting the beam after it has passed through the said medium support;
    - detecting means (20; Dt) that receive the beam collected by the said receiving means in order to deliver a read signal; and
    - drive means (11, 12) for providing the relative displacement of the said medium support with respect to the said laser beam so as to be able to read all the information recorded in the plane to be read,

    the said system being **characterized in that** the said detecting means operate in far field and **in that** they are associated with filtering means (Ftv; Df) for detecting only the low-frequency spatial components of the transmitted beam.

16. Optical system according to Claim 15, **characterized in that** the said detecting means are furthermore designed to perform push-pull reading of the said information elements.

17. Optical system according to either of Claims 15 and 16, **characterized in that** the said filtering means are designed to provide a resulting antisymmetric detection sensitivity curve having an approximately zero value around the centre of the beam and on its edges and a symmetry with respect to this centre.

18. Optical system according to Claim 17, **characterized in that** the said detecting means comprise at least two detectors (Dtl, Dt2) that lie in a plane perpendicular to the optical axis (Oz) of the collected beam and are aligned along the projection (O'x') in this plane of the direction of displacement of the medium support and positioned symmetrically with respect to the said optical axis, **in that** the said filtering means are formed by a filter (Ftv) of variable transparency, having a substantially zero transparency at the centre and on its edges and a maximum transparency centred on the front and rear sides of the beam transmitted or reflected by the medium support and **in that** comparison means, for comparing the phase of the signals from the two detectors, are provided in order to deliver a signal that constitutes a focusing error signal intended for controlling the focusing of the beam delivered by the said illumination means.

19. Optical system according to one of Claims 16 and 17, **characterized in that** the said detecting means comprise four detectors (1 to 4) that lie in a plane perpendicular to the optical axis of the collected beam, are aligned in pairs along the projection in this plane of the direction of displacement of the medium support and are positioned symmetrically with respect to the said optical axis and with respect to the said projection, and **in that** the said system furthermore comprises:

    - two first electronic summation circuits (214, 213) for summing the signals on the pairs of detectors (1, 4; 2, 3) symmetrical with respect to the said projection, respectively;
    - a first differential amplifier (222) that receives the sums (Av, Ar) from the said two first circuits in order to deliver therefrom the difference that constitutes a signal HF for reading the information recorded in the plane to be read;
    - comparison means (223) for comparing the phase of the signals from the two first summation circuits in order to deliver a signal that constitutes a focusing error signal (Sz) intended for controlling the focusing of the beam delivered by the said illumination means;
    - two second electronic summation circuits (211, 212) for summing the signals from the pairs of detectors (1, 2; 3, 4), respectively, on either side of the said projection; and
    - a second differential amplifier (221) that receives the sums from the said two second circuits in order to deliver therefrom the difference which constitutes a radial tracking signal (Spp) for the information to be read.

20. Optical system according to either of Claims 16 and 17, **characterized in that** the said detecting means comprise four detectors (1 to 4) that lie in a plane perpendicular to the optical axis of the collected beam, are aligned in pairs along the projection in this plane of the direction of displacement of the medium support and are positioned symmetrically with respect to the said optical axis and with respect to the said projection, and **in that** the said system furthermore comprises:

- two first electronic summation circuits (214, 213) for summing the signals from the pairs of detectors (1, 4; 2, 3) symmetrical with respect to the said projection, respectively;
- a first differential amplifier (222) that receives the sums (Av, Ar) from the said two first circuits in order to deliver therefrom the difference that constitutes a signal HF for reading the information recorded in the plane to be read;
- two second electronic summation circuits (211, 212) for summing the signals from the pairs of detectors (1, 2; 3, 4), respectively, on either side of the said projection;
- a second differential amplifier (221) that receives the sums from the said two second circuits in order to deliver therefrom the difference that constitutes a radial tracking signal (Spp) for the information to be read;
- a third electronic summation circuit (215) for summing the signals from the four detectors; and
- means for detecting that component of the sum signal delivered by the said third circuit which is in quadrature with the said read signal HF delivered by the first differential amplifier, in order to deduce therefrom a focusing error signal intended for controlling the focusing of the beam delivered by the said illumination means.

21. Optical system according to one of Claims 19 and 20, **characterized in that** the said filtering means are formed by a filter (Ftv) of variable transparency.

22. Optical system according to one of Claims 16, 17, 19 and 20, **characterized in that** the said filtering means are formed by a diffracting device (Df), placed in the path of the collected beam, such that the diffracted intensity corresponds to the said predetermined sensitivity curve.

23. Optical system according to Claim 22, **characterized in that** the said diffracting device comprises several diffracting elements ($Df_1$ to $Df_4$) for splitting the said collected beam into a series of individual beams directed respectively towards the said detectors (1 to 4).

24. Optical system according to Claim 23, **characterized in that** the said diffracting device furthermore includes an additional element that sends the central portion of the collected beam onto an additional detector (5) in order to deliver service information.

25. Optical system according to one of Claims 22 to 24, in which the said illumination means and the said receiving means comprise a common objective (Ob) serving both for focusing the laser beam ($B_i$) onto the plane to be read and for collecting this beam ($B_c$) after it has passed through the said medium support, **characterized in that** the said diffracting device is positioned, substantially in the object focal plane (OFP) of the objective, after the latter in the direction of propagation of the collected beam.

FIG.1

FIG.2

FIG.3

FIG.4

FIG.5

FIG.6

FIG.7

FIG.8

FIG.9

FIG. 10

FIG.11

FIG.12

FIG.13

FIG.14

FIG.15

Edn1

Edn

Eo

Sm

HF

FIG.16

301

HF

302

ÉCHANTILLONNEUR BLOQUEUR

304

305

Sz

Sm

303

ÉCHANTILLONNEUR BLOQUEUR

100

102

110

101

10

FIG.17

200

Pn-1

Pn

Cn-1

111

## FIG.18

201

202

Pn-1

n2

112

n1

Pn

n2

## FIG.19

201'

202'

Pn-1

n2

n1

112'

Pn

n2

## FIG.20